# EUROPÄISCHE PATENTSCHRIFT

(11) **EP 3 364 156 B1**
(45) Veröffentlichungstag und Bekanntmachung des Hinweises auf die Patenterteilung: **07.04.2021**
(21) Anmeldenummer: 17157044.3
(22) Anmeldetag: 21.02.2017
(51) Int. Cl.: G01D 4/00

(54) **VERFAHREN UND VORRICHTUNG ZUM ERMITTELN EINES GRUNDLASTPROFILS EINES HAUSHALTSNETZES**
METHOD AND DEVICE FOR DETERMINING THE BASE LOAD PROFILE OF A DOMESTIC NETWORK
PROCÉDÉ ET DISPOSITIF DE DÉTERMINATION D'UN PROFIL DE CHARGE DE BASE D'UN RÉSEAU DOMESTIQUE

(43) Veröffentlichungstag der Anmeldung: 22.08.2018
(73) Patentinhaber: EET - Efficient Energy Technology GmbH, 8055 Graz (AT)
(72) Erfinder: WEINBERGER, Stephan, 8662 St. Barbara im Mürztal (AT); GRIMMER, Christoph, 8010 Graz (AT); GEBETSROITHER, Florian, 8010 Graz (AT); HACKER, Viktor, 8042 Graz (AT)
(74) Vertreter: Weiser & Voith Patentanwälte Partnerschaft

(56) Entgegenhaltungen:
- EP-A1- 2 784 944
- EP-B1- 1 110 058
- WO-A2-2012/065078
- DE-A1-102015 206 510
- US-A1- 2014 309 956

## Beschreibung

Die vorliegende Erfindung betrifft ein Verfahren zum Ermitteln eines Grundlastprofils eines mit einem Versorgungsnetz verbundenen elektrischen Haushaltsnetzes mit mehreren Verbraucheranschlüssen mithilfe einer mit einem der Verbraucheranschlüsse verbundenen Messvorrichtung, wobei das Grundlastprofil in zyklisch wiederkehrenden Zeitfenstern ähnlich ist. Die Erfindung betrifft ferner die in dem Verfahren einsetzbare Messvorrichtung und ein Verfahren und eine Schaltvorrichtung zum Schalten einer Speisevorrichtung zum Rückspeisen von Energie in das Haushaltsnetz.

Im Allgemeinen wird zum Messen des elektrischen Energieverbrauchs eines mit einem Versorgungsnetz verbundenen Haushaltsnetzes ein Stromzähler eingesetzt. Der Stromzähler ist dem jeweiligen Haushaltsnetz vorgeschaltet, sodass die gesamte, von allen Verbrauchern des Haushaltsnetzes aufgenommene elektrische Energie den Stromzähler passieren muss. Solche Stromzähler sind Leistungsmessgeräte, welche die aufgenommene elektrische Leistung über die Zeit zu einer verbrauchten Energie aufsummieren und die Summe ablesbar machen.

Neuerdings werden anstelle der Stromzähler sogenannte "Smart Meter" verwendet, welche einzelne Leistungsmesswerte zu Messzeitpunkten aufzeichnen, nicht bloß aufsummieren, siehe z.B. EP 1 110 058 B1. Daraus kann ein Lastprofil des Haushaltsnetzes erstellt werden, welches über das Verbrauchsverhalten an einen z.B. tageszeit- oder spitzenlastabhängigen Stromtarif eines Energieversorgers angepasst werden könnte. Dabei sind Smart Meter aufgrund ihrer Messgenauigkeit und -auflösung sogar in der Lage, einzelne Energieverbraucher im Haushaltsnetz zu identifizieren.

Dem Haushalt werden die Messwerte aus einem Smart Meter vom Energieversorger jedoch, wenn überhaupt, bloß im Nachhinein und meist nicht mit allen Details übermittelt. Um das Verbrauchsverhalten zu optimieren, wäre es jedoch vorteilhaft, den Momentanverbrauch zu bestimmen und insbesondere das kaum beeinflussbare, zyklisch in zumindest ähnlicher Form wiederkehrende Grundlastprofil durch Verbraucher wie Kühlschrank, Heizung od.dgl. zu kennen und die einfacher beeinflussbaren Spitzenlasten durch Verbraucher wie Beleuchtung, Waschmaschine, Haushaltselektronik od.dgl. geeignet zu verändern, um Kosten und Energie zu sparen. Der Einbau eines weiteren, dem Haushalt direkt zugänglichen Smart Meters kommt jedoch aufgrund aufwändiger baulicher Maßnahmen meist nicht in Frage.

In manchen Haushalten ist ferner eine Speisevorrichtung zum Rückspeisen von Energie in das Haushaltsnetz vorgesehen, z.B. eine batteriegepufferte Solaranlage oder ein Batteriepuffer mit Wechselrichter. Der Einsatz einer solchen Speisevorrichtung ist besonders sinnvoll, um im Haushaltsnetz anfallende Spitzenlasten abzudecken; ein Rückspeisen in das Versorgungsnetz ist hingegen angesichts niedriger Rückspeisetarife meist unerwünscht.

Aus der WO 2012/065078 A2 ist ein Messgerät bekannt, welches an einen Verbraucheranschluss im Haushaltsnetz angeschlossen wird und jederzeit die vom Haushaltsnetz gerade aufgenommene elektrische Leistung messen kann. Dazu speist das Messgerät ein Messsignal in den Verbraucheranschluss ein und errechnet daraus den augenblicklichen Leitwert des Haushaltsnetzes. Der Leitwert G ist der gesuchten elektrischen Leistung P über die Beziehung P = V² * G bei konstanter Netzspannung V proportional. Durch Verwendung eines Messsignals hoher Frequenz wird der Einfluss außerhalb des Haushaltsnetzes liegender Netze auf das Messergebnis deutlich abgeschwächt; durch eine Messung bei verschiedenen Frequenzen kann ferner der Leitwert bei Netzfrequenz gut extrapoliert werden. Allerdings lässt sich mit einer solchen Augenblicksleistung keinerlei Aussage über das Grundlastprofil des Haushaltsnetzes treffen.

Die Erfindung setzt sich zum Ziel, ein Verfahren und eine Vorrichtung zu schaffen, welche das Grundlastprofil eines Haushaltsnetzes zumindest näherungsweise ermitteln lassen, um dieses insbesondere zum Schalten einer Speisevorrichtung nutzbar zu machen.

Dieses Ziel wird gemäß einem ersten Aspekt der Erfindung durch ein Verfahren der einleitend genannten Art erreicht, welches die folgenden Schritte umfasst:
(a) Initialisieren eines Speichers der Messvorrichtung mit einer Folge von über ein Zeitfenster verteilten Messzeitpunkten und jeweils einem Referenzleitwert für jeden Messzeitpunkt;
(b) Einspeisen eines Messsignals eines Signalgenerators der Messvorrichtung in den Verbraucheranschluss zu einem Messzeitpunkt der Folge und Erfassen einer Signalantwort an dem Verbraucheranschluss in einer Auswerteeinheit der Messvorrichtung;
(c) Ermitteln eines dem genannten Messzeitpunkt zugehörigen Leitwerts des Verbraucheranschlusses aus der erfassten Signalantwort in der Auswerteeinheit;
(d) Auslesen des dem genannten Messzeitpunkt zugehörigen Referenzleitwerts aus dem Speicher und Vergleichen des ermittelten Leitwerts mit dem ausgelesenen Referenzleitwert und, wenn der ermittelte Leitwert diesen Referenzleitwert unterschreitet, Ersetzen dieses Referenzleitwerts durch den ermittelten Leitwert im Speicher;
(e) Wiederholen der Schritte (b) bis (d) für jeweils einen weiteren Messzeitpunkt der Folge; und
(f) Wiederholen der Schritte (b) bis (e) für zumindest eine weitere Folge von über ein weiteres Zeitfenster gleichartig verteilten Messzeitpunkten, um im Speicher eine das Grundlastprofil des Haushaltsnetzes repräsentierende Folge von Referenzleitwerten zu erhalten.

Die im Speicher erhaltene Folge von Referenzleitwerten entspricht den niedrigsten über alle betrachteten Zeitfenster ermittelten Leitwerten. Die ermittelte Folge von Referenzwerten repräsentiert dadurch das kaum oder gar nicht veränderliche Grundlastprofil des Haushaltsnetzwerks. Je mehr Zeitfenster betrachtet werden, desto genauer ist die Ermittlung des Grundlastprofils bzw. der Referenzwerte; allerdings ergibt sich je nach Haushaltsnetz bereits nach wenigen Zeitfenstern zumindest eine gute Näherung des Grundlastprofils, da die meisten Spitzenlastverbraucher nur kurzzeitig eingeschaltet sind. Unter anderem infolge der in jedem Fehlerstrom-Schutzschalter enthaltenen Induktivitäten können dabei umliegende Netze, z.B. das Versorgungsnetz und Nachbar-Haushaltsnetze, durch Wahl hoher Frequenzen für das Messsignal im Wesentlichen ausgeblendet werden.

Um auch einer langfristigen Veränderung des Grundlastprofils, z.B. jahreszeitlichen Schwankungen, Rechnung zu tragen, wird in Schritt (d) der ausgelesene Referenzleitwert erhöht und im Speicher durch den erhöhten Referenzleitwert ersetzt, wenn beim Vergleichen der ermittelte Leitwert den ausgelesenen Referenzleitwert nicht unterschreitet. Auf diese Weise ist sichergestellt, dass auch geringfügige Schwankungen oder gelegentliche Lücken in der Grundlast nicht zu einer dauerhaften Verzerrung des ermittelten Grundlastprofils führen.

Eine vorteilhafte Variante des Verfahrens zeichnet sich durch die zwischen den Schritten (c) und (d) ausgeführten zusätzlichen Schritte aus:
(i) Bilden eines gleitenden Mittelwerts aus dem ermittelten Leitwert und den einer vorbestimmten Anzahl vorhergehender Messzeitpunkten zugehörigen ermittelten Leitwerten in der Auswerteeinheit; und
(ii) Vergleichen des ermittelten Leitwerts mit einer Differenz aus dem gebildeten Mittelwert und einem vorgegebenen Korrekturwert und, wenn der ermittelte Leitwert die genannte Differenz nicht unterschreitet, Überspringen des Schritts (d) für den genannten Messzeitpunkt.

Die gleitende Mittelwertbildung in Schritt (i) bewirkt bereits eine Glättung. Im folgenden Schritt (ii) werden nur noch solche ermittelte Leitwerte für die spätere Betrachtung ausgewählt, welche den Mittelwert um mehr als den Korrekturwert unterschreiten. Dadurch gehen geringe Schwankungen beim Ermitteln der Leitwerte, insbesondere solche, die z.B. auf Veränderungen im außerhalb des Haushaltsnetzes liegenden Netz zurückgehen, in die weitere Betrachtung nicht ein, was wiederum zu einer höheren Treffsicherheit des Verfahrenes führt.

Auch in Schritt (ii) wird zur Berücksichtigung langfristiger Veränderungen des Grundlastprofils der dem genannten Messzeitpunkt zugehörige Referenzleitwert aus dem Speicher ausgelesen, erhöht und im Speicher durch den erhöhten Referenzleitwert ersetzt, wenn beim Vergleichen der ermittelte Leitwert die genannte Differenz nicht unterschreitet.

Besonders günstig ist dabei, wenn das genannte Erhöhen des ausgelesenen Referenzleitwerts durch Multiplikation mit einem vorgegebenen Faktor erfolgt, welcher größer als 1 und kleiner als 2, bevorzugt zwischen 1,01 und 1,2, besonders bevorzugt etwa 1,05 ist. Eine solche Gewichtung ist einfach und rasch durchzuführen und der Faktor flexibel an die Erfordernisse anpassbar. Ein Faktor der genannten Größe führt zu einer gleichmäßigen Entwicklung der Folge von Referenzwerten und dabei zur laufenden Anpassung des Grundlastprofils an das Haushaltsnetz.

Im Allgemeinen sind Leitwerte komplexwertig. Da bei der Messung des Energieverbrauchs meist nur Wirkleistung betrachtet wird, ist es vorteilhaft, wenn die Referenzleitwerte und die ermittelten Leitwerte Wirkleitwerte sind. Dadurch werden Auswertungsaufwand und Speicherplatz gespart.

Im alternativen Fall, dass Blindleistung gemessen werden soll, ist zur Verringerung des Aufwandes günstig, wenn die Referenzleitwerte und die ermittelten Leitwerte Blindleitwerte sind.

Die Dauer eines Zeitfensters kann vom betrachteten Haushaltsnetz abhängig sein. Bevorzugt entspricht jedes Zeitfenster einem Tag. Dies ist besonders einfach und stellt das im Alltag häufigste zyklisch wiederkehrende Zeitfenster dar.

In einem weiteren Aspekt schafft die Erfindung ein Verfahren zum Schalten einer Speisevorrichtung zum Rückspeisen von Energie in das Haushaltsnetz in Abhängigkeit von dem nach dem vorgenannten Verfahren ermittelten Grundlastprofil, mit einer die Messvorrichtung umfassenden Schaltvorrichtung, welche an die Speisevorrichtung angeschlossen ist, mit den zusätzlichen Schritten:
- in einem Messzeitpunkt, Vergleichen des ermittelten Leitwerts mit einer Summe aus dem Referenzleitwert und einem vorgegebenen Schwellwert in der Schaltvorrichtung, und
- wenn der ermittelte Leitwert die genannte Summe übersteigt, Einschalten der Speisevorrichtung mittels der Schaltvorrichtung, andernfalls, Ausschalten der Speisevorrichtung.

Auf diese Weise ist die Speisevorrichtung nur dann aktiviert, wenn das Haushaltsnetz ausreichend Energie verbraucht, sodass ein unerwünschtes Rückspeisen der gespeicherten Energie ins Versorgungsnetz verhindert wird. Der Schwellwert bewirkt ferner, dass die Speisevorrichtung nicht in einem ineffizienten Niederlastbereich betrieben werden muss.

In einem dritten Aspekt schafft die Erfindung eine Messvorrichtung zum Ermitteln eines Grundlastprofils eines mit einem Versorgungsnetz verbundenen elektrischen Haushaltsnetzes mit mehreren Verbraucheranschlüssen, wobei das Grundlastprofil in zyklisch wiederkehrenden Zeitfenstern ähnlich und die Messvorrichtung mit einem der Verbraucheranschlüsse verbindbar ist, umfassend:
einen Speicher für eine Folge von über ein Zeitfenster verteilten Messzeitpunkten und jeweils einem Referenzleitwert für jeden Messzeitpunkt;
einen Signalgenerator zum Einspeisen eines Messsignals in den Verbraucheranschluss zu einem Messzeitpunkt der Folge; und
eine Auswerteeinheit, welche dafür ausgebildet ist, an dem Verbraucheranschluss eine Signalantwort des eingespeisten Messsignals zu erfassen und daraus einen dem genannten Messzeitpunkt zugehörigen Leitwert des Verbraucheranschlusses zu ermitteln, den dem genannten Messzeitpunkt zugehörigen Referenzleitwert aus dem Speicher auszulesen, den ermittelten Leitwert mit dem ausgelesenen Referenzleitwert zu vergleichen und, wenn der ermittelte Leitwert diesen Referenzleitwert unterschreitet, diesen Referenzleitwert im Speicher durch den ermittelten Leitwert zu ersetzen,
wobei die Messvorrichtung ferner dafür ausgebildet ist, Signalgenerator und Auswerteeinheit wiederholt für jeweils einen weiteren Messzeitpunkt der Folge anzustoßen und dies für zumindest eine weitere Folge von über ein weiteres Zeitfenster gleichartig verteilten Messzeitpunkten zu wiederholen, um im Speicher eine das Grundlastprofil des Haushaltsnetzes repräsentierende Folge von Referenzleitwerten zu erhalten,
und wobei die Auswerteeinheit ferner dafür ausgebildet ist, den ausgelesenen Referenzleitwert zu erhöhen und im Speieher mit durch den erhöhten Referenzleitwert zu ersetzen, wenn beim genannten Vergleichen der ermittelte Leitwert den ausgelesenen Referenzleitwert nicht unterschreitet.

In einem vierten Aspekt schafft die Erfindung eine Schaltvorrichtung zum Schalten einer Speisevorrichtung zum Rückspeisen von Energie in das Haushaltsnetz, umfassend die Messvorrichtung der vorgenannten Art, wobei die Schaltvorrichtung an die Speisevorrichtung anschließbar und dafür ausgebildet ist, in einem Messzeitpunkt den ermittelten Leitwert mit einer Summe aus dem Referenzleitwert und einem vorgegebenen Schwellwert zu vergleichen und, wenn der ermittelte Leitwert die genannte Summe übersteigt, die Speisevorrichtung einzuschalten, andernfalls, die Speisevorrichtung auszuschalten.

Bezüglich der Vorteile und weiterer Ausführungsformen der Messvorrichtung und der Schaltvorrichtung wird auf die obigen Ausführungen zum Verfahren verwiesen.

Die Erfindung wird nachfolgend anhand von in den beigeschlossenen Zeichnungen dargestellten Ausführungsbeispielen näher erläutert. In den Zeichnungen zeigt:
Fig. 1 ein elektrisches Netz mit einer erfindungsgemäßen Messvorrichtung in einem schematischen Ersatzschaltbild;
Fig. 2 eine erfindungsgemäße Schaltvorrichtung mit der Messvorrichtung von Fig. 1 in einem schematischen Blockschaltbild;
Fig. 3 eine Folge von ermittelten Leitwerten und eine ein Grundlastprofil repräsentierende Folge von Referenzleitwerten in einem Diagramm über der Zeit; und
Fig. 4 das erfindungsgemäße Verfahren zum Ermitteln eines Grundlastprofils und zum Schalten einer Speisevorrichtung in einem Flussdiagramm.

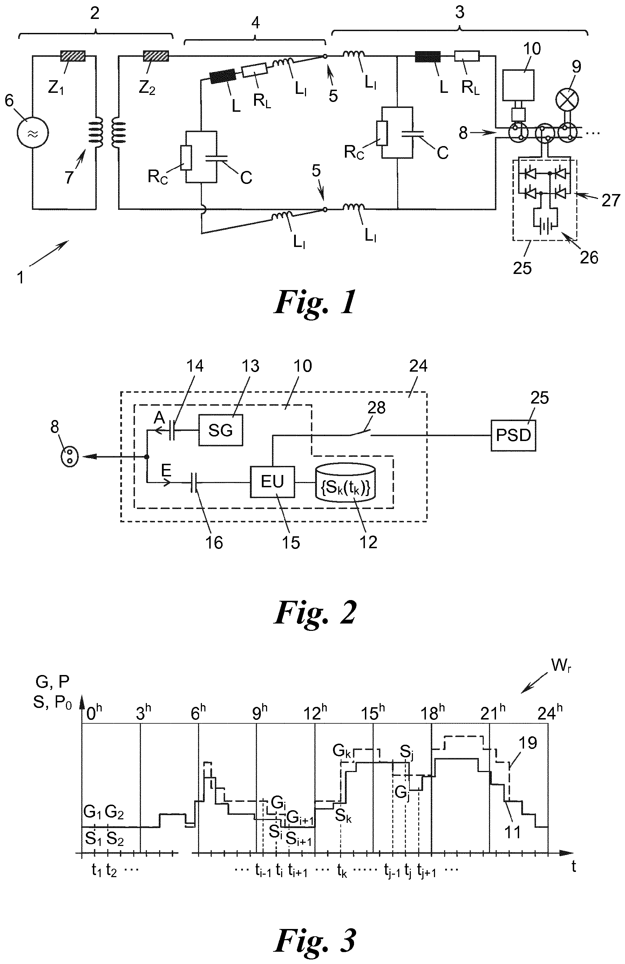

Gemäß Fig. 1 umfasst ein elektrisches Netz 1 ein Versorgungsnetz 2, mit welchem ein Haushaltsnetz 3 und zumindest ein weiteres Haushaltsnetz 4 über Anbindungen 5 verbunden sind. Das Versorgungsnetz 2 hat eine Energiequelle 6, z.B. einen Generator, einen Transformator 7 und sowohl hoch- als auch niederspannungsseitig jeweils eine Leitungsimpedanz Z₁, Z₂ in dem Ersatzschaltbild von Fig. 1.

Das Haushaltsnetz 3 ist - wie ebenso weitere Haushaltsnetze 4 - in dem beispielhaften Ersatzschaltbild von Fig. 1 durch eine Induktivität L mit Wirkanteil R_{L} und eine Kapazität C mit parallelem Wirkanteil R_{C} versinnbildlicht. An den Anbindungen 5 hat das Haushaltsnetz 3 ferner Eingangsinduktivitäten L_{I}, welche beispielsweise von einem Fehlerstromschutzschalter herrühren. Das Haushaltsnetz 3 hat mehrere Verbraucheranschlüsse 8, mit welchen verschiedene elektrische Verbraucher 9 des Haushaltsnetzes 3 und im Beispiel der Fig. 1 ferner eine Messvorrichtung 10 verbunden sind.

Anhand der in den Fig. 2 bis 4 dargestellten Beispiele werden in der Folge Aufbau, Funktion und Verfahren der erfindungsgemäßen Messvorrichtung 10 erläutert.

Die Messvorrichtung 10 dient dazu, ein Grundlastprofil 11 (durchgezogene Kurve im Diagramm der Fig. 3), welches den Verlauf einer Grundlast P₀ des Haushaltsnetzes 3 über der Zeit widerspiegelt, zu ermitteln. Ein solches Grundlastprofil 11 hat meist eine zyklisch wiederkehrend ähnliche Form. In Kenntnis des Grundlastprofils 11 kann z.B. der Energieverbrauch im Haushaltsnetz 3 optimiert werden.

Wie weiter unten ausführlich erläutert wird, wird das Grundlastprofil 11 in zyklisch wiederkehrenden Zeitfenstern W₁, W₂, ..., allgemein Wᵣ, ermittelt. Die Zeitfenster Wᵣ im Beispiel der Fig. 3 entsprechen einem Tag, d.h. 24 Stunden. Sie könnten alternativ einem anderen Zeitraum entsprechen, z.B. einer Woche, einem Teil eines Tages, z.B. zwischen 6 Uhr und 22 Uhr, od.dgl. Die Länge der Zeitfenster Wᵣ und ihr optionaler gegenseitiger zeitlicher Abstand, d.h. der Zyklus der Zeitfenster Wᵣ, werden gemäß der zyklisch wiederkehrenden Form des Grundlastprofils 11 des betrachteten Haushaltsnetz 3 gewählt.

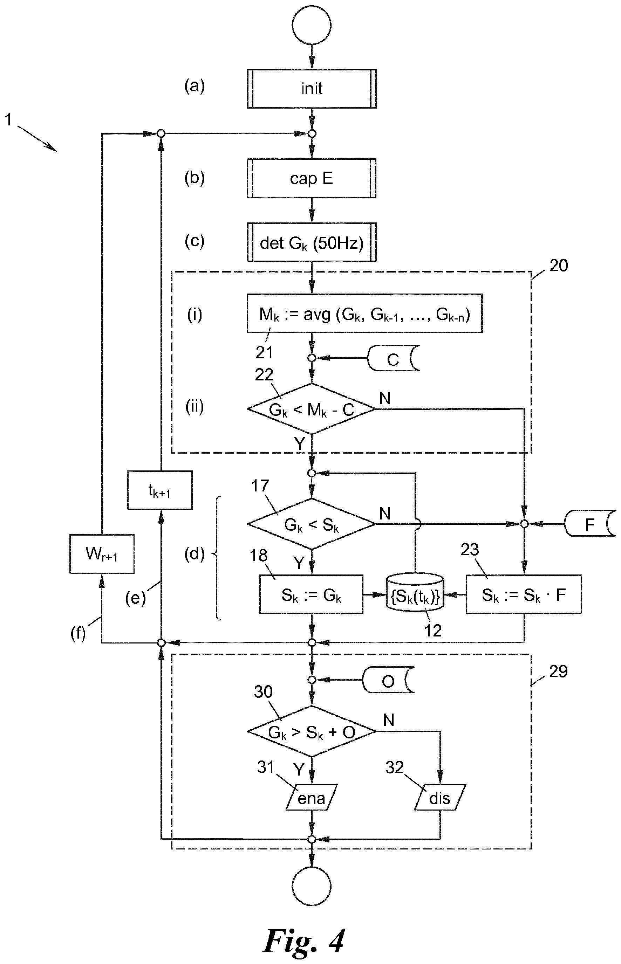

Gemäß dem Beispiel der Fig. 2 umfasst die Messvorrichtung 10 einen Speicher 12. In einem ersten Schritt (a) des Verfahrens zum Ermitteln des Grundlastprofils 11 (Fig. 4) wird der Speicher 12 zunächst mit einer Folge {Sₖ(tₖ)} von über ein Zeitfenster Wᵣ verteilten Messzeitpunkten t₁, t₂, ..., allgemein tₖ, und jeweils einem Referenzleitwert S₁, S₂, ..., allgemein Sₖ, für jeden Messzeitpunkt tₖ initialisiert. Für die Initialisierung können realistische Referenzleitwerte Sₖ vorab abgeschätzt oder einfach sehr hohe Referenzwerte Sₖ angenommen werden.

In einem folgenden Schritt (b) speist ein Signalgenerator 13 der Messvorrichtung 10 (Fig. 2) zu einem Messzeitpunkt tₖ der Folge, z.B. über einen Koppelkondensator 14, ein Messsignal A in den Verbraucheranschluss 8 ein. Eine Auswerteeinheit 15 der Messvorrichtung 10 erfasst darauf, z.B. über einen weiteren Koppelkondensator 16, eine Signalantwort E an dem Verbraucheranschluss 8.

Die Signalantwort E ist naturgemäß die Antwort des (gesamten) elektrischen Netzes 1 - nicht wie eigentlich gewünscht bloß des Haushaltsnetzes 3 - auf das Messsignal A an dem Verbraucheranschluss 8. Vor allem dank der Eingangsinduktivitäten L_{I} kann jedoch bei geeignet hohen Frequenzen des Messsignals A der verfälschende Einfluss des Versorgungsnetzes 2 und des weiteren Haushaltsnetzes 4 in der Signalantwort E entscheidend eingeschränkt werden, wie dem Fachmann bekannt ist, sodass die Signalantwort E ausreichend genau die Eigenschaften des Haushaltsnetzes 3 widerspiegelt.

In einem anschließenden Schritt (c) ermittelt die Auswerteeinheit 15 aus der erfassten Signalantwort E einen dem genannten Messzeitpunkt tₖ zugehörigen Leitwert Gₖ des Verbraucheranschlusses 8. Dabei können, wie dem Fachmann bekannt ist, durch Einsatz eines Messsignals A mit verschiedenen Frequenzen alle Bauteile des gewählten Ersatzschaltbildes (Fig. 1) des Haushaltsnetzes 3 (hier: Induktivität L mit Wirkanteil R_{L} und Kapazität C mit parallelem Wirkanteil R_{C}) errechnet und daraus der Leitwert Gₖ im Messzeitpunkt tₖ für die interessierende Netzfrequenz (50 Hz oder 60 Hz) ermittelt werden. Im beispielhaften Ersatzschaltbild der Fig. 1 können dazu bereits drei verschiedene Messfrequenzen des Messsignals A ausreichen; bei komplexeren Ersatzschaltbildern kann eine größere Anzahl verschiedener Messfrequenzen des Messsignals A erforderlich sein.

Wenn gewünscht, kann das Messsignal A dergestalt sein, dass die Auswerteeinheit 15 zu jedem Messzeitpunkt tₖ an der erfassten Signalantwort E mehrere Leitwerte errechnen kann und daraus den plausibelsten oder einen Misch- oder Mittelwert als Leitwert Gₖ ermittelt.

In einem folgenden Schritt (d) liest die Auswerteeinheit 15, die an den Speicher 12 angeschlossen ist, den dem genannten Messzeitpunkt tₖ zugehörigen Referenzleitwert Sₖ aus dem Speicher 12 aus und vergleicht den ermittelten Leitwert Gₖ mit dem ausgelesenen Referenzleitwert Sₖ in einer Verzweigung 17. Wenn der ermittelte Leitwert Gₖ den Referenzleitwert Sₖ unterschreitet (Pfad "Y" der Verzweigung 17), ersetzt die Auswerteeinheit 15 diesen Referenzleitwert Sₖ im Speicher 12 durch den ermittelten Leitwert Gₖ (Block 18) .

In einer Schleife (e) wiederholt darauf die Messvorrichtung 10 die Schritte (b) bis (d) für jeweils einen weiteren Messzeitpunkt tₖ₊₁ der Folge. Sind die Schritte (b) bis (d) für alle Messzeitpunkte tₖ eines Zeitfensters Wᵣ durchgeführt worden, so wiederholt die Messvorrichtung 10 in einer Schleife (f) die Schritte (b) bis (e) für zumindest eine weitere Folge von über ein weiteres Zeitfenster Wᵣ₊₁ gleichartig verteilten Messzeitpunkten tₖ.

Auf diese Weise erhält die Messvorrichtung 3 im Speicher 12 eine Folge {Sₖ(tₖ)} von Referenzleitwerten Sₖ, welche im Wesentlichen den für jeden Messzeitpunkt tₖ ermittelten minimalen Leitwerten Gₖ entsprechen, also jenen Leitwerten Gₖ, die bei niedrigster Last, d.h. der Grundlast, im Haushaltsnetz 3 auf treten. Somit repräsentiert die Folge {Sₖ(tₖ)} von Referenzleitwerten Sₖ das Grundlastprofil 11, da das Grundlastprofil 11 bzw. die Grundlast P₀ des Haushaltsnetzes 3 zu einem Messzeitpunkt tₖ und der dem Messzeitpunkt tₖ zugehörige Referenzleitwert Sₖ über die bekannte Beziehung P₀ = V² * Sₖ zusammenhängen, worin die Netzspannung V als bekannt und im Wesentlichen konstant angenommen werden kann.

Es versteht sich, dass weitere Wiederholungen der Schritte (b) bis (d) bzw. Schleifen (e) für weitere Zeitfenster Wᵣ im Allgemeinen ein genaueres Grundlastprofil 11 ergeben.

Im Beispiel der Fig. 3 versinnbildlicht die durchgezogene Kurve das Grundlastprofil 11, wogegen die strichlierte Kurve die Folge der in den Messzeitpunkten tₖ ermittelten Leitwerte Gₖ zeigt, welche ein Lastprofil 19 der jeweils aus dem Versorgungsnetz 2 bezogenen Leistung P repräsentierten. Während gewisser Tageszeiten, z.B. in der Nacht, sind Grundlastprofil 11 und Lastprofil 19 zumindest näherungsweise gleich, siehe die jeweils den Messzeitpunkten t₁, t₂ zugehörigen Leitwerte G₁, G₂ und Referenzleitwerte S₁, S₂. Der dem Messzeitpunkt tᵢ zugehörige ermittelte Leitwert Gᵢ ist hingegen größer als der zugehörige Referenzleitwert Sᵢ. Zum folgenden Messzeitpunkt tᵢ₊₁ sind ermittelter Leitwert Gᵢ₊₁ und Referenzleitwert Sᵢ₊₁ wiederum (etwa) gleich. Zu einem späteren Messzeitpunkt tⱼ ist im Beispiel der Fig. 3 der ermittelte Leitwert Gⱼ geringer als der aus dem Speicher 12 ausgelesene Referenzleitwert Sⱼ; dieser Referenzleitwert Sⱼ würde folglich gemäß Block 18 in Schritt (d) im Speicher 12 durch den ermittelten Leitwert Gⱼ ersetzt werden.

Die Stufenformen von Grundlastprofil 11 und Lastprofil 19 sind beispielhaft und ergeben sich jeweils dadurch, dass in einem Haushaltsnetz 3 im Allgemeinen einzelne Verbraucher zu- bzw. abgeschaltet werden, was sich in den ermittelten Leitwerten Gₖ und folglich in den Referenzleitwerten Sₖ niederschlägt.

Die Messauflösung, d.h. die Anzahl der Messzeitpunkte tₖ in den Zeitfenstern Wᵣ, kann in Abhängigkeit vom Bedarf und der Größe des Speichers 12 gewählt werden.

Leitwerte sind im Allgemeinen komplexwertig. Angesichts der in Versorgungsnetzen 2 üblichen Kostenabrechnung, welche meist auf Wirkleistung, manchmal auf Bildleistung basiert, können die Referenzleitwerte Sₖ und die ermittelten Leitwerte Gₖ jeweils Wirkleitwerte oder alternativ, wenn gewünscht, Blindleitwerte sein.

Optional führt die Auswerteeinheit 15 zwischen den Schritten (c) und (d) zusätzliche, im Beispiel der Fig. 4 durch den Rahmen 20 markierte Schritte aus, um eine gleichmäßigere Ermittlung des Grundlastprofils 11 zu erzielen. Dazu bildet die Auswerteeinheit 15 in einem Schritt (i) einen gleitenden Mittelwert Mₖ aus dem dem Messzeitpunkt tₖ zugehörigen ermittelten Leitwert Gₖ und einer vorbestimmten Anzahl n, z.B. fünf oder acht, vorhergehenden Messzeitpunkten tₖ₋₁, tₖ₋₂,..., tₖ₋ₙ zugehörigen Leitwerten Gₖ₋₁, Gₖ₋₂,..., Gₖ₋ₙ (Block 21). In einem folgenden Schritt (ii) vergleicht die Auswerteeinheit 15 in einer Verzweigung 22 den ermittelten Leitwert Gₖ mit einer Differenz aus dem gebildeten Mittelwert Mₖ und einem vorgegebenen Korrekturwert C und überspringt (Pfad "N" der Verzweigung 22) den Schritt (d) für den genannten Messzeitpunkt tₖ, wenn der ermittelte Leitwert Gₖ die genannte Differenz (Mₖ - C) nicht unterschreitet. Andernfalls (Pfad "Y" der Verzweigung 22) setzt die Auswerteeinheit 15 mit Schritt (d) fort.

Wie der optionale Block 23 in Fig. 4 versinnbildlicht, kann im Fall, dass der Vergleich in Schritt (d) negativ ausfällt (Pfad "N" der Verzweigung 17), d.h. dass beim Vergleichen der ermittelte Leitwert Gₖ den ausgelesenen Referenzwert Sₖ nicht unterschreitet, dieser ausgelesene Referenzwert Sₖ optional erhöht und im Speicher 12 durch den erhöhten Referenzwert ersetzt werden. Alternativ kann Block 23 entfallen, d.h. wenn der Vergleich in Schritt (d) negativ ausfällt (Pfad "N" der Verzweigung 17), kann der Referenzwert Sₖ im Speicher 12 unverändert belassen werden. Ebenso kann in dem Fall, dass der Vergleich im optionalen Schritt (ii) negativ ausfällt (Pfad "N" der Verzweigung 22), d.h. dass beim Vergleichen der ermittelte Leitwert Gₖ die genannte Differenz (Mₖ - C) nicht unterschreitet, der ausgelesene Referenzwert Sₖ erhöht und im Speicher 12 durch den erhöhten Referenzwert ersetzt werden, wenn gewünscht.

In Block 23 des Beispiels der Fig. 4 erfolgt das genannte Erhöhen des ausgelesenen Referenzleitwerts Sₖ durch Multiplikation mit einem vorgegebenen Faktor F. Der Faktor F ist größer 1 und kleiner 2, um einer zu raschen Änderung des Referenzwerts Sₖ vorzubeugen; bevorzugt ist der Faktor F zwischen 1,01 und 1,2, besonders bevorzugt etwa 1,05. Der Faktor F wird dabei an die Erfordernisse der Anwendung und an die Länge des Zeitfensters Wᵣ angepasst; anstelle der Multiplikation mit dem Faktor F könnte zum genannten Erhöhen des ausgelesenen Referenzwerts Sₖ zu diesem z.B. ein fixer Korrekturwert addiert werden.

Zurückkommend auf Fig. 2 kann die Messvorrichtung 10 zu einer Schaltvorrichtung 24 erweitert werden, welche die Messvorrichtung 10 umfasst. Die Schaltvorrichtung 24 ist an eine Speisevorrichtung 25 mit Pufferspeicher 26 und Wechselrichter 27 (Fig. 1), z.B. eine batteriegepufferte Solaranlage oder einen anderen geregelten Energiespeicher ("power storage device", PSD), angeschlossen und hat zumindest einen Schalter 28 zum Schalten der Speisevorrichtung 25. Dabei nutzt die Schaltvorrichtung 24 das in der Messvorrichtung 10 ausgeführte Verfahren zum Ermitteln des Grundlastprofils 11 und ergänzt es um einen zusätzlichen Abschnitt 29 (Fig. 4).

In einer Verzweigung 30 des Verfahrensabschnitts 29 wird in der Schaltvorrichtung 24 - beispielsweise in der Auswerteeinheit 15 der Messvorrichtung 10 - in Abhängigkeit von dem ermittelten Grundlastprofil 11 im Messzeitpunkt tₖ der ermittelte Leitwert Gₖ mit einer Summe aus dem zugehörigen Referenzleitwert Sₖ und einem vorgegebenen Schwellwert O verglichen. Wenn der ermittelte Leitwert Gₖ die genannte Summe (Sₖ + O) übersteigt, wird die Speisevorrichtung 25 mithilfe des Schalters 28 eingeschaltet, wie die Steuernachricht 31 in Pfad "Y" der Verzweigung 30 versinnbildlicht, und andernfalls (Pfad "N" der Verzweigung 30), wird die Speisevorrichtung 25 ausgeschaltet (Steuernachricht 32).

Die Schaltvorrichtung 24 könnte optional über die Steuernachrichten 31, 32 ferner Informationen über den tatsächlichen aktuellen Leistungsbedarf, d.h. die Differenz zwischen dem ermittelten Leitwert Gₖ und dem Referenzleitwert Sₖ zum Messzeitpunkt tₖ, an die Speisevorrichtung 25 ausgeben, sodass die Speisevorrichtung 25 z.B. mithilfe des Wechselrichters 27 die in das Haushaltsnetz 3 rückgespeiste Energie an den Bedarf anpasst. Der Schwellwert O entspricht dabei einem Mindestwert der Rückspeiseleistung, unterhalb welchem ein Betrieb der Speiseeinheit 25 mit gutem Wirkungsgrad nicht möglich wäre.

Die Erfindung ist nicht auf die dargestellten Ausführungsformen beschränkt, sondern umfasst alle Varianten, Modifikationen und Kombinationen, die in den Rahmen der angeschlossenen Ansprüche fallen.

## Patentansprüche

1. Verfahren zum Ermitteln eines Grundlastprofils (11) eines mit einem Versorgungsnetz (2) verbundenen elektrischen Haushaltsnetzes (3) mit mehreren Verbraucheranschlüssen (8) mithilfe einer mit einem der Verbraucheranschlüsse (8) verbundenen Messvorrichtung (10), wobei das Grundlastprofil (11) in zyklisch wiederkehrenden Zeitfenstern (Wᵣ) ähnlich ist, umfassend die Schritte:
(a) Initialisieren eines Speichers (12) der Messvorrichtung (10) mit einer Folge von über ein Zeitfenster (Wᵣ) verteilten Messzeitpunkten (tₖ) und jeweils einem Referenzleitwert (Sₖ) für jeden Messzeitpunkt (tₖ);
(b) Einspeisen eines Messsignals (A) eines Signalgenerators (13) der Messvorrichtung (10) in den Verbraucheranschluss (8) zu einem Messzeitpunkt (tₖ) der Folge und Erfassen einer Signalantwort (E) an dem Verbraucheranschluss (8) in einer Auswerteeinheit (15) der Messvorrichtung (10);
(c) Ermitteln eines dem genannten Messzeitpunkt (tₖ) zugehörigen Leitwerts (Gₖ) des Verbraucheranschlusses (8) aus der erfassten Signalantwort (E) in der Auswerteeinheit (15);
(d) Auslesen des dem genannten Messzeitpunkt (tₖ) zugehörigen Referenzleitwerts (Sₖ) aus dem Speicher (12) und Vergleichen des ermittelten Leitwerts (Gₖ) mit dem ausgelesenen Referenzleitwert (Sₖ) und, wenn der ermittelte Leitwert (Gₖ) diesen Referenzleitwert (Sₖ) unterschreitet, Ersetzen dieses Referenzleitwerts (Sₖ) durch den ermittelten Leitwert (Gₖ) im Speicher (12) ;
(e) Wiederholen der Schritte (b) bis (d) für jeweils einen weiteren Messzeitpunkt (tₖ₊₁) der Folge; und
(f) Wiederholen der Schritte (b) bis (e) für zumindest eine weitere Folge von über ein weiteres Zeitfenster (Wᵣ₊₁) gleichartig verteilten Messzeitpunkten (tₖ), um im Speicher (12) eine das Grundlastprofil (11) des Haushaltsnetzes (3) repräsentierende Folge von Referenzleitwerten (Sₖ) zu erhalten, wobei in Schritt (d) der ausgelesene Referenzleitwert (Sₖ) erhöht und im Speicher (12) durch den erhöhten Referenzleitwert ersetzt wird, wenn beim Vergleichen der ermittelte Leitwert (Gₖ) den ausgelesenen Referenzleitwert (Sₖ) nicht unterschreitet.

2. Verfahren nach Anspruch 1, **gekennzeichnet durch** die zwischen den Schritten (c) und (d) ausgeführten zusätzlichen Schritte:
(i) Bilden eines gleitenden Mittelwerts (Mₖ) aus dem ermittelten Leitwert (Gₖ) und den einer vorbestimmten Anzahl (n) vorhergehender Messzeitpunkten zugehörigen ermittelten Leitwerten in der Auswerteeinheit (15); und
(ii) Vergleichen des ermittelten Leitwerts (Gₖ) mit einer Differenz aus dem gebildeten Mittelwert (Mₖ) und einem vorgegebenen Korrekturwert (C) und, wenn der ermittelte Leitwert (Gₖ) die genannte Differenz nicht unterschreitet, Überspringen des Schritts (d) für den genannten Messzeitpunkt (tₖ),
wobei in Schritt (ii) der dem genannten Messzeitpunkt (tₖ) zugehörige Referenzleitwert (Sₖ) aus dem Speicher (12) ausgelesen, erhöht und im Speicher (12) durch den erhöhten Referenzleitwert ersetzt wird, wenn beim Vergleichen der ermittelte Leitwert (Gₖ) die genannte Differenz nicht unterschreitet.

3. Verfahren nach Anspruch 1 oder 2, **dadurch gekennzeichnet, dass** das genannte Erhöhen des ausgelesenen Referenzleitwerts (Sₖ) durch Multiplikation mit einem vorgegebenen Faktor (F) erfolgt, welcher größer als 1 und kleiner als 2, bevorzugt zwischen 1,01 und 1,2, besonders bevorzugt etwa 1,05 ist.

4. Verfahren nach einem der Ansprüche 1 bis 3, **dadurch gekennzeichnet, dass** die Referenzleitwerte (Sₖ) und die ermittelten Leitwerte (Gₖ) Wirkleitwerte sind.

5. Verfahren nach einem der Ansprüche 1 bis 3, **dadurch gekennzeichnet, dass** die Referenzleitwerte (Sₖ) und die ermittelten Leitwerte (Gₖ) Blindleitwerte sind.

6. Verfahren nach einem der Ansprüche 1 bis 5, **dadurch gekennzeichnet, dass** jedes Zeitfenster (Wᵣ) einem Tag entspricht.

7. Verfahren zum Schalten einer Speisevorrichtung (25) zum Rückspeisen von Energie in das Haushaltsnetz (3) in Abhängigkeit von dem nach einem der Ansprüche 1 bis 6 ermittelten Grundlastprofil (11), mit einer die Messvorrichtung (10) umfassenden Schaltvorrichtung (24), welche an die Speisevorrichtung (25) angeschlossen ist, mit den zusätzlichen Schritten:
- in einem Messzeitpunkt (tₖ), Vergleichen des ermittelten Leitwerts (Gₖ) mit einer Summe aus dem Referenzleitwert (Sₖ) und einem vorgegebenen Schwellwert (O) in der Schaltvorrichtung (24), und
- wenn der ermittelte Leitwert (Gₖ) die genannte Summe übersteigt, Einschalten der Speisevorrichtung (25) mittels der Schaltvorrichtung (24), andernfalls, Ausschalten der Speisevorrichtung (25).

8. Messvorrichtung zum Ermitteln eines Grundlastprofils (11) eines mit einem Versorgungsnetz (2) verbundenen elektrischen Haushaltsnetzes (3) mit mehreren Verbraucheranschlüssen (8), wobei das Grundlastprofil (11) in zyklisch wiederkehrenden Zeitfenstern (Wᵣ) ähnlich und die Messvorrichtung (10) mit einem der Verbraucheranschlüsse (8) verbindbar ist, umfassend:
einen Speicher (12) für eine Folge von über ein Zeitfenster (Wᵣ) verteilten Messzeitpunkten (tₖ) und jeweils einem Referenzleitwert (Sₖ) für jeden Messzeitpunkt (tₖ);
einen Signalgenerator (13) zum Einspeisen eines Messsignals (A) in den Verbraucheranschluss (8) zu einem Messzeitpunkt (tₖ) der Folge; und
eine Auswerteeinheit (15), welche dafür ausgebildet ist, an dem Verbraucheranschluss (8) eine Signalantwort (E) des eingespeisten Messsignals (A) zu erfassen und daraus einen dem genannten Messzeitpunkt (tₖ) zugehörigen Leitwert (Gₖ) des Verbraucheranschlusses (8) zu ermitteln, den dem genannten Messzeitpunkt (tₖ) zugehörigen Referenzleitwert (Sₖ) aus dem Speieher (12) auszulesen, den ermittelten Leitwert (Gₖ) mit dem ausgelesenen Referenzleitwert (Sₖ) zu vergleichen und, wenn der ermittelte Leitwert (Gₖ) diesen Referenzleitwert (Sₖ) unterschreitet, diesen Referenzleitwert (Sₖ) im Speicher (12) durch den ermittelten Leitwert (Gₖ) zu ersetzen,
wobei die Messvorrichtung (10) ferner dafür ausgebildet ist, Signalgenerator (13) und Auswerteeinheit (15) wiederholt für jeweils einen weiteren Messzeitpunkt (tₖ₊₁) der Folge anzustoßen und dies für zumindest eine weitere Folge von über ein weiteres Zeitfenster (Wᵣ₊₁) gleichartig verteilten Messzeitpunkten (tₖ) zu wiederholen, um im Speicher (12) eine das Grundlastprofil (11) des Haushaltsnetzes (3) repräsentierende Folge von Referenzleitwerten (Sₖ) zu erhalten,
und wobei die Auswerteeinheit (15) ferner dafür ausgebildet ist, den ausgelesenen Referenzleitwert (Sₖ) zu erhöhen und im Speicher (12) mit durch den erhöhten Referenzleitwert zu ersetzen, wenn beim genannten Vergleichen der ermittelte Leitwert (Gₖ) den ausgelesenen Referenzleitwert (Sₖ) nicht unterschreitet.

9. Messvorrichtung nach Anspruch 8 , **dadurch gekennzeichnet, dass** die Auswerteeinheit (15) ferner dafür ausgebildet ist, nach dem Ermitteln des Leitwerts (Gₖ) einen gleitenden Mittelwert (Mₖ) aus dem ermittelten Leitwert (Gₖ) und den einer vorbestimmten Anzahl (n) vorhergehender Messzeitpunkte zugehörigen ermittelten Leitwerten zu bilden und den ermittelten Leitwert (Gₖ) mit einer Differenz aus dem gebildeten Mittelwert (Mₖ) und einem vorgegebenen Korrekturwert (C) zu vergleichen, und wenn der ermittelte Leitwert (Gₖ) die genannte Differenz nicht unterschreitet, für den genannten Messzeitpunkt (tₖ) das Auslesen des diesem zugeordneten Referenzleitwerts (Sₖ) und das Vergleichen mit dem ermittelten Leitwert (Gₖ) zu überspringen, wobei die Auswerteeinheit (15) ferner dafür ausgebildet ist, den dem genannten Messzeitpunkt (tₖ) zugehörigen Referenzleitwert (Sₖ) aus dem Speicher (12) auszulesen, zu erhöhen und im Speicher (12) durch den erhöhten Referenzleitwert zu ersetzen, wenn beim Vergleichen der ermittelte Leitwert (Gₖ) die genannte Differenz nicht unterschreitet.

10. Messvorrichtung nach Anspruch 8 oder 9, **dadurch gekennzeichnet, dass** die Auswerteeinheit (15) dafür ausgebildet ist, zum genannten Erhöhen den ausgelesenen Referenzleitwert (Sₖ) mit einem vorgegebenen Faktor (F) zu multiplizieren, welcher Faktor (F) größer als 1 und kleiner als 2, bevorzugt zwischen 1,01 und 1,2, besonders bevorzugt etwa 1,05 ist.

11. Schaltvorrichtung zum Schalten einer Speisevorrichtung (25) zum Rückspeisen von Energie in das Haushaltsnetz (3), umfassend die Messvorrichtung (10) nach einem der Ansprüche 8 bis 10, **dadurch gekennzeichnet, dass**
die Schaltvorrichtung (24) an die Speisevorrichtung (25) anschließbar und dafür ausgebildet ist, in einem Messzeitpunkt (tₖ) den ermittelten Leitwert (Gₖ) mit einer Summe aus dem Referenzleitwert (Sₖ) und einem vorgegebenen Schwellwert (O) zu vergleichen und, wenn der ermittelte Leitwert (Gₖ) die genannte Summe übersteigt, die Speisevorrichtung (25) einzuschalten, andernfalls, die Speisevorrichtung (25) auszuschalten.

## Claims

1. A method for determining a base load profile (11) of a household electrical network (3), which network is connected to a supply network (2) and has a plurality of load connections (8), by means of a measuring device (10) connected to one of the load connections (8), wherein the base load profile (11) is similar in cyclically recurring time windows (Wᵣ), comprising the steps:
(a) initialising a memory (12) of the measuring device (10) with a sequence of measurement times (tₖ) distributed over a time window (Wᵣ) and with a respective reference conductance value (Sₖ) for each measurement time (tₖ);
(b) feeding a measurement signal (A) of a signal generator (13) of the measuring device (10) into the load connection (8) at a measurement time (tₖ) of the sequence and capturing a signal response (E) at the load connection (8) in an evaluation unit (15) of the measuring device (10);
(c) determining a conductance value (Gₖ) of the load connection (8), which value appertains to said measurement time (tₖ), from the captured signal response (E) in the evaluation unit (15);
(d) reading out the reference conductance value (Sₖ) appertaining to said measurement time (tₖ) from the memory (12) and comparing the determined conductance value (Gₖ) with the read out reference conductance value (Sₖ) and, when the determined conductance value (Gₖ) is below this reference conductance value (Sₖ), replacing this reference conductance value (Sₖ) in the memory (12) by the determined conductance value (Gₖ);
(e) repeating the steps (b) to (d) for a respective further measurement time (tₖ₊₁) of the sequence; and
(f) repeating the steps (b) to (e) for at least one further sequence of measurement times (tₖ) distributed in the same manner over a further time window (Wᵣ₊₁), in order to obtain, in the memory (12), a sequence of reference conductance values (Sₖ) representing the base load profile (11) of the household electrical network (3),
wherein, in step (d), the read out reference conductance value (Sₖ) is increased and replaced in the memory (12) by the increased reference conductance value, when, during comparing, the determined conductance value (Gₖ) is not below the read out reference conductance value (Sₖ).

2. The method according to claim 1, **characterised by** the additional steps carried out between the steps (c) and (d):
(i) calculating, in the evaluation unit (15), a moving average value (Mₖ) from the determined conductance value (Gₖ) and the determined conductance values appertaining to a predetermined number (n) of preceding measurement times; and
(ii) comparing the determined conductance value (Gₖ) with a difference of the calculated average value (Mₖ) and a predefined correction value (C) and, when the determined conductance value (Gₖ) is not below said difference, skipping step (d) for said measurement time (tₖ),
wherein, in step (ii), the reference conductance value (Sₖ) appertaining to said measurement time (tₖ) is read out from the memory (12), increased and replaced in the memory (12) by the increased reference conductance value, when, during comparing, the determined conductance value (Gₖ) is not below said difference.

3. The method according to claim 1 or 2, **characterised in that** said increasing of the read out reference conductance value (Sₖ) is performed by multiplication with a predefined factor (F) which is greater than 1 and smaller than 2, preferably between 1.01 and 1.2, particularly preferably approximately 1.05.

4. The method according to any one of claims 1 to 3, **characterised in that** the reference conductance values (Sₖ) and the determined conductance values (Gₖ) are conductances.

5. The method according to any one of claims 1 to 3, **characterised in that** the reference conductance values (Sₖ) and the determined conductance values (Gₖ) are susceptances.

6. The method according to any one of claims 1 to 5, **characterised in that** each time window (Wᵣ) corresponds to one day.

7. A method for switching a feeding device (25) for feeding back energy into the household electrical network (3) in dependence on the base load profile (11) determined according to any one of claims 1 to 6, with a switching device (24) which comprises the measuring device (10) and is connected to the feeding device (25), with the additional steps:
- at a measurement time (tₖ), comparing the determined conductance value (Gₖ) with a sum of the reference conductance value (Sₖ) and a predefined threshold value (O) in the switching device (24), and
- when the determined conductance value (Gₖ) is greater than said sum, switching on the feeding device (25) by means of the switching device (24), otherwise, switching off the feeding device (25).

8. A measuring device for determining a base load profile (11) of a household electrical network (3), which network is connected to a supply network (2) and has a plurality of load connections (8), wherein the base load profile (11) is similar in cyclically recurring time windows (Wᵣ) and the measuring device (10) can be connected to one of the load connections (8), comprising:
a memory (12) for a sequence of measurement times (tₖ) distributed over a time window (Wᵣ) and for a respective reference conductance value (Sₖ) for each measurement time (tₖ);
a signal generator (13) for feeding a measurement signal (A) into the load connection (8) at a measurement time (tₖ) of the sequence; and
an evaluation unit (15) configured to capture, at the load connection (8), a signal response (E) of the fed in measurement signal (A) and to determine, therefrom, a conductance value (Gₖ) of the load connection (8), which value appertains to said measurement time (tₖ), to read out the reference conductance value (Sₖ) appertaining to said measurement time (tₖ) from the memory (12), to compare the determined conductance value (Gₖ) with the read out reference conductance value (Sₖ) and, when the determined conductance value (Gₖ) is below this reference conductance value (Sₖ), to replace this reference conductance value (Sₖ) in the memory (12) by the determined conductance value (Gₖ);
wherein the measuring device (10) is further configured to repeatedly activate the signal generator (13) and the evaluation unit (15) for a respective further measurement time (tₖ₊₁) of the sequence and to repeat this for at least one further sequence of measurement times (tₖ) distributed in the same manner over a further time window (Wᵣ₊₁), in order to obtain, in the memory (12), a sequence of reference conductance values (Sₖ) representing the base load profile (11) of the household electrical network (3),
and wherein the evaluation unit (15) is further configured to increase the read out reference conductance value (Sₖ) and to replace it in the memory (12) by the increased reference conductance value, when, during said comparing, the determined conductance value (Gₖ) is not below the read out reference conductance value (Sₖ).

9. The measuring device according to claim 8, **characterised in that** the evaluation unit (15) is further configured to calculate, after determining the conductance value (Gₖ), a moving average value (Mₖ) from the determined conductance value (Gₖ) and the determined conductance values appertaining to a predetermined number (n) of preceding measurement times and to compare the determined conductance value (Gₖ) with a difference of the calculated average value (Mₖ) and a predefined correction value (C) and, when the determined conductance value (Gₖ) is not below said difference, to skip, for said measurement time (tₖ), the reading out the reference conductance value (Sₖ) appertaining thereto and the comparing with the determined conductance value (Gₖ), wherein the evaluation unit (15) is further configured to read out the reference conductance value (Sₖ) appertaining to said measurement time (tₖ) from the memory (12), to increase it and to replace it in the memory (12) by the increased reference conductance value, when, during comparing, the determined conductance value (Gₖ) is not below said difference.

10. The measuring device according to claim 8 or 9, **characterised in that** the evaluation unit (15) is configured to multiply, for said increasing, the read out reference conductance value (Sₖ) with a predefined factor (F), which factor (F) is greater than 1 and smaller than 2, preferably between 1.01 and 1.2, particularly preferably approximately 1.05.

11. A switching device for switching a feeding device (25) for feeding back energy into the household electrical network (3), comprising the measuring device (10) according to any one of claims 8 to 10, **characterised in that**
the switching device (24) can be connected to the feeding device (25) and is configured to compare, at a measurement time (tₖ), the determined conductance value (Gₖ) with a sum of the reference conductance value (Sₖ) and a predefined threshold value (O) and, when the determined conductance value (Gₖ) is greater than said sum, to switch on the feeding device (25), otherwise, to switch off the feeding device (25).

## Revendications

1. Procédé de détermination d'un profil de charge de base (11) d'un réseau domestique (3) électrique, lequel réseau est relié à un réseau d'alimentation (2) et a plusieurs raccordements de consommateur (8), à l'aide d'un dispositif de mesure (10) relié à un des raccordements de consommateur (8), où le profil de charge de base (11) est semblable dans des fenêtres de temps (Wᵣ) se répétant de manière cyclique, comprenant les étapes :
(a) l'initialisation d'une mémoire (12) du dispositif de mesure (10) avec une séquence d'instants de mesure (tₖ) distribués sur une fenêtre de temps (Wᵣ) et avec une valeur de conductance de référence (Sₖ) respective pour chaque instant de mesure (tₖ) ;
(b) l'introduction d'un signal de mesure (A) d'un générateur de signaux (13) du dispositif de mesure (10) dans le raccordement de consommateur (8) à un instant de mesure (tₖ) de la séquence et la détection d'une réponse de signal (E) au niveau du raccordement de consommateur (8) dans une unité d'évaluation (15) du dispositif de mesure (10) ;
(c) la détermination d'une valeur de conductance (Gₖ) du raccordement de consommateur (8), laquelle valeur appartient audit instant de mesure (tₖ), à partir de la réponse de signal (E) dans l'unité d'évaluation (15) ;
(d) la lecture de la valeur de conductance de référence (Sₖ) appartenant audit instant de mesure (tₖ) à partir de la mémoire (12) et la comparaison de la valeur de conductance (Gₖ) déterminée avec la valeur de conductance de référence (Sₖ) lue, et, lorsque la valeur de conductance (Gₖ) déterminée est en-dessous de cette valeur de conductance de référence (Sₖ), le remplacement dans la mémoire (12) de cette valeur de conductance de référence (Sₖ) par la valeur de conductance (Gₖ) déterminée ;
(e) la répétition des étapes (b) à (d) chaque fois pour un nouvel instant de mesure (tₖ₊₁) de la séquence ; et
(f) la répétition des étapes (b) à (e) pour au moins une nouvelle séquence d'instants de mesure (tₖ) distribués de la même manière sur une nouvelle fenêtre de temps (Wᵣ₊₁) afin d'obtenir dans la mémoire (12) une séquence de valeurs de conductance de référence (Sₖ) représentant le profil de charge de base (11) du réseau domestique (3),
où, dans l'étape (d), la valeur de conductance de référence (Sₖ) lue est augmentée et est remplacée dans la mémoire (12) par la valeur de conductance de référence augmentée lorsque, lors de la comparaison, la valeur de conductance (Gₖ) déterminée n'est pas en-dessous de la valeur de conductance de référence (Sₖ) lue.

2. Procédé selon la revendication 1, **caractérisé par** les étapes supplémentaires exécutées entre les étapes (c) et (d) :
(i) la formation d'une valeur moyenne (Mₖ) glissante à partir de la valeur de conductance (Gₖ) déterminée et des valeurs de conductance déterminées appartenant à un nombre (n) prédéterminé d'instants de mesure précédents, dans l'unité d'évaluation (15) ; et
(ii) la comparaison de la valeur de conductance (Gₖ) déterminée avec une différence à base de la valeur moyenne (Mₖ) formée et d'une valeur de correction (C) prédéfinie, et, lorsque la valeur de conductance (Gₖ) déterminée n'est pas en-dessous de ladite différence, le saut de l'étape (d) pour ledit instant de mesure (tₖ),
où, dans l'étape (ii), la valeur de conductance de référence (Sₖ) appartenant audit instant de mesure (tₖ) est lue à partir de la mémoire (12), est augmentée et est remplacée dans la mémoire (12) par la valeur de conductance de référence augmentée, lorsque, lors de la comparaison, la valeur de conductance (Gₖ) déterminée n'est pas en-dessous de ladite différence.

3. Procédé selon la revendication 1 ou la revendication 2, **caractérisé en ce que** ladite augmentation de la valeur de conductance de référence (Sₖ) lue a lieu par une multiplication par un facteur (F) prédéfini, lequel est supérieur à 1 et inférieur à 2, de préférence entre 1,01 et 1,2, de manière particulièrement préférée, environ 1,05.

4. Procédé selon l'une des revendications 1 à 3, **caractérisé en ce que** les valeurs de conductance de référence (Sₖ) et les valeurs de conductance (Gₖ) déterminées sont des conductances.

5. Procédé selon l'une des revendications 1 à 3, **caractérisé en ce que** les valeurs de conductance de référence (Sₖ) et les valeurs de conductance (Gₖ) déterminées sont des susceptances.

6. Procédé selon l'une des revendications 1 à 5, **caractérisé en ce que** chaque fenêtre de temps (Wᵣ) correspond à une journée.

7. Procédé de commutation d'un dispositif d'alimentation (25) permettant de réapprovisionner en énergie le réseau domestique (3) en fonction du profil de charge de base (11) déterminé selon l'une des revendications 1 à 6, avec un dispositif de commutation (24) comprenant le dispositif de mesure (10) et raccordé au dispositif d'alimentation (25), avec les étapes supplémentaires :
- à un instant de mesure (tₖ), la comparaison de la valeur de conductance (Gₖ) déterminée avec une somme à base de la valeur de conductance de référence (Sₖ) et d'une valeur de seuil (O) prédéfinie, dans le dispositif de commutation (24), et
- lorsque la valeur de conductance (Gₖ) déterminée dépasse ladite somme, l'activation du dispositif d'alimentation (25) au moyen du dispositif de commutation (24), dans le cas contraire, la désactivation du dispositif d'alimentation (25).

8. Dispositif de mesure permettant la détermination d'un profil de charge de base (11) d'un réseau domestique (3) électrique, lequel réseau est relié avec un réseau d'alimentation (2) et a plusieurs raccordements de consommateur (8), où le profil de charge de base (11) est semblable dans des fenêtres de temps (Wᵣ) se répétant de manière cyclique et le dispositif de mesure (10) peut être relié avec un des raccordements de consommateur (8), comprenant :
une mémoire (12) pour une séquence d'instants de mesure (tₖ) distribués sur une fenêtre de temps (Wᵣ) et pour une valeur de conductance de référence (Sₖ) respective pour chaque instant de mesure (tₖ) ;
un générateur de signaux (13) pour introduire un signal de mesure (A) dans le raccordement de consommateur (8) à un instant de mesure (tₖ) de la séquence ; et
une unité d'évaluation (15), laquelle est conçue pour détecter, au niveau du raccordement de consommateur (8), une réponse de signal (E) au signal de mesure (A) introduit et déterminer à partir de celle-ci une valeur de conductance (Gₖ) du raccordement de consommateur (8), laquelle valeur appartient audit instant de mesure (8), lire la valeur de conductance de référence (Sₖ) appartenant audit instant de mesure (tₖ) à partir de la mémoire (12), comparer la valeur de conductance (Gₖ) déterminée avec la valeur de conductance de référence (Sₖ) lue, et, lorsque la valeur de conductance (Gₖ) déterminée est en-dessous de cette valeur de conductance de référence (Sₖ), remplacer cette valeur de conductance de référence (Sₖ) par la valeur de conductance (Gₖ) déterminée, dans la mémoire (12),
où le dispositif de mesure (10) est en outre conçu pour déclencher le générateur de signaux (13) et l'unité d'évaluation (15) de manière répétée chaque fois pour un nouvel instant de mesure (tₖ₊₁) de la séquence et pour répéter ceci pour au moins une nouvelle séquence d'instants de mesure (tₖ) distribués de la même manière sur une nouvelle fenêtre de temps (Wᵣ₊₁), afin d'obtenir dans la mémoire (12) une séquence de valeurs de conductance de référence (Sₖ) représentative du profil de charge de base (11) du réseau domestique (3),
et où l'unité d'évaluation (15) est en outre conçue pour augmenter la valeur de conductance de référence (Sₖ) lue et la remplacer dans la mémoire (12) avec la valeur de conductance de référence augmentée si, lorsque, lors de ladite comparaison, la valeur de conductance (Gₖ) déterminée n'est pas en-dessous de la valeur de conductance de référence (Sₖ) lue.

9. Dispositif de mesure selon la revendication 8, **caractérisé en ce que** l'unité d'évaluation (15) est en outre conçue pour, après la détermination de la valeur de conductance (Gₖ), former une valeur moyenne (Mₖ) glissante à partir de la valeur de conductance (Gₖ) déterminée et des valeurs de conductance déterminées appartenant à un nombre (n) prédéterminé d'instants de mesure précédents et comparer la valeur de conductance (Gₖ) déterminée avec une différence à base de la valeur moyenne (Mₖ) formée et d'une valeur de correction (C) prédéfinie, et, lorsque la valeur de conductance (Gₖ) déterminée n'est pas en-dessous de ladite différence, sauter, pour ledit instant de mesure (tₖ), la lecture de la valeur de conductance de référence (Sₖ) appartenant celui-ci et la comparaison avec la valeur de conductance (Gₖ) déterminée, où l'unité d'évaluation (15) est en outre conçue pour lire la valeur de conductance de référence (Sₖ) appartenant audit instant de mesure (tₖ) à partir de la mémoire (12), l'augmenter et la remplacer dans la mémoire (12) par la valeur de conductance de référence augmentée, lorsque, lors de la comparaison, la valeur de conductance (Gₖ) déterminée n'est pas en-dessous de ladite différence.

10. Dispositif de mesure selon la revendication 8 ou la revendication 9, **caractérisé en ce que** l'unité d'évaluation (15) est conçue pour multiplier, pour ladite augmentation, la valeur de conductance de référence (Sₖ) lue avec un facteur (F) prédéfini, lequel facteur (F) est supérieur à 1 et inférieur à 2, de préférence entre 1,01 et 1,2, de manière particulièrement préférée, environ 1,05.

11. Dispositif de commutation pour commuter un dispositif d'alimentation (25) permettant de réapprovisionner en énergie le réseau domestique (3), comprenant le dispositif de mesure (10) selon l'une des revendications 8 à 10, **caractérisé en ce que**
le dispositif de commutation (24) peut être raccordé au dispositif d'alimentation (25) et est conçu pour comparer, à un instant de mesure (tₖ), la valeur de conductance (Gₖ) déterminée avec une somme à base de la valeur de conductance de référence (Sₖ) et d'une valeur de seuil (O) prédéfinie et, lorsque la valeur de conductance (Gₖ) déterminée dépasse ladite somme, activer le dispositif d'alimentation (25), dans le cas contraire, désactiver le dispositif d'alimentation (25).
